# EUROPEAN PATENT SPECIFICATION

(11) **EP 3 373 520 B1**
(45) Date of publication and mention of the grant of the patent: **02.09.2020**
(21) Application number: 16868038.7
(22) Date of filing: 25.11.2016
(51) Int. Cl.: H04W 24/08, H04L 12/26, H04W 92/12, H04W 92/20

(54) **STATUS DETECTION METHOD AND WIRELESS NETWORK NODE**
ZUSTANDSERKENNUNGSVERFAHREN UND DRAHTLOSNETZWERKKNOTEN
PROCÉDÉ DE DÉTECTION D'ÉTAT ET NOEUD DE RÉSEAU SANS FIL

(30) Priority: 27.11.2015 CN 201510847561
(43) Date of publication of application: 12.09.2018
(73) Proprietor: Huawei Technologies Co., Ltd., Longgang District Shenzhen, Guangdong 518129 (CN)
(72) Inventor: XUE, Wan, Shenzhen Guangdong 518129 (CN)
(74) Representative: Thun, Clemens
(86) International application number: PCT/CN2016/107256
(87) International publication number: WO 2017/088815

(56) References cited:
- CN-A- 101 621 548
- CN-A- 101 909 059
- CN-A- 101 977 128
- CN-A- 102 781 017
- CN-A- 103 298 023
- CN-A- 103 428 037
- CN-A- 105 517 195
- US-A1- 2014 177 434
- HUANG S BEAULIEU D ROCHEFORT CISCO SYSTEMS G ET AL: "A Traffic-Based Method of Detecting Dead Internet Key Exchange (IKE) Peers; rfc3706.txt", A TRAFFIC-BASED METHOD OF DETECTING DEAD INTERNET KEY EXCHANGE (IKE) PEERS; RFC3706.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 February 2004 (2004-02-01), XP015009486,

## Description

### TECHNICAL FIELD

The present invention relates to the field of communications technologies, and in particular, to a status detection method and a wireless network node.

### BACKGROUND

In the field of mobile communications technologies, to obtain a peer end network status to conduct a communication service, a network node such as a base station or a controller needs to determine the peer end network status.

Currently, there are mainly two peer end status detection manners. In a 3G network, a service address pair status is regularly detected by pinging, so that a wireless network node in the network obtains a peer end network status. In a Long Term Evolution (Long Term Evolution, LTE) network, a service address pair status is regularly detected by using a packet data packet encapsulation (GPRS Tunneling Protocol User Plane, GTPU) response, so that a wireless network node in the network obtains a peer end network status.

A packet needs to be sent periodically regardless of whether pinging or a periodic heartbeat (GTPU response) is used. If a radio network controller (Radio Network Controller, RNC) is connected to tens of hundreds of base stations, or LTE is connected to a large quantity of S1 or X2 interfaces, consumption of both a central processing unit (Central Processing Unit, CPU) and network traffic is high, and scalability of such detection is extremely poor.

Prior art document Huang, S Beaulieu, D Rochefort, Cisco systems, "A traffic-based method of detecting dead internet key exchange", February 1, 2004, refers to a method for detecting a dead internet key exchange peer that is in use by a number of vendors. The method, called DPD, uses IPSec traffic patterns to minimize the number of IKE messages that are needed to confirm liveness.

### SUMMARY

This application provides a status detection method and a wireless network node, to greatly reduce traffic consumption between networks, reduce load on a network device, and improve detection efficiency.

In a first aspect a status detection method performed by a first wireless network node is provided, wherein the method comprises:
- determining whether a normal data packet sent by a second wireless network node is received within a first preset time interval, wherein the normal data packet is a General Packet Radio Service Tunneling Protocol - U Echo Request packet, GTP-U Echo Request packet;
- if the normal data packet sent by the second wireless network node is received within the first preset time interval, determining that a status of the second wireless network node is online, wherein when the status of the second wireless network node is online, no probe packet needs to be sent to the second wireless network node;
- if the normal data packet sent by the second wireless network node is not received within the first preset time interval, sending a probe packet to the second wireless network node, and determining, when the first wireless network node receives a first response message returned by the second wireless network node, that a status of the second wireless network node is online.

In a first implementation form of the first aspect the method further comprises:

resending the probe packet if the first wireless network node does not receive, at a preset moment, the first response message returned by the second wireless network node, and if a response message returned by the second wireless network node is still not received when the probe packet is sent for an Nth time, determining that the status of the second wireless network node if offline, wherein N>1 and N is a positive integer.

In a second aspect a status detection method performed by a second wireless network node is provided, wherein the method comprises:
- receiving a probe packet sent by a first wireless network node;
- sending to the first wireless network node within a first preset time interval, a first response message in response to the probe packet;
- determining whether a normal data packet sent by the first wireless network node is received within a second preset time interval, wherein the normal data packet is a General Packet Radio Service Tunneling Protocol - U Echo Request packet, GTP-U Echo Request packet;
- if the normal data packet sent by the first wireless network node is received within the second preset time interval, determining that the status of the first wireless network node is online, wherein when the status of the first wireless network node is online, no probe packet needs to be sent to the first wireless network node; and
- if the normal data packet sent by the first wireless network node is not received within the second preset time interval, sending a probe packet to the first wireless network node, and determining, when the second wireless network node receives a second response message returned by the first wireless network node, that the status of the first wireless network node is online.

In a third aspect a first wireless network node is provided configured to perform any of the methods according to the first aspect or its implementation forms.

In a fourth aspect a second wireless network node is provided configured to perform the method according to the second aspect.

In a fifth aspect a computer storage medium is provided, wherein the medium is configured to store a program which, when executed, causes the steps according to the second aspect to be performed.

As can be learned from the foregoing technical solutions, this application have the following advantages:
In this application, when there is normal data traffic between two wireless network nodes, it may be directly determined that a peer end is online. When there is no normal data traffic between two wireless network nodes, a wireless network node that needs to know a peer end network status sends a probe packet to a peer end to determine whether the peer end is online. In this application, a quantity of service packets for peer end status detection is minimized by using traffic of the packets, thereby greatly reducing traffic consumption between networks, reducing load on a network device, and improving detection efficiency.

### BRIEF DESCRIPTION OF DRAWINGS

FIG. 1 is a schematic diagram of an embodiment of a wireless network node according to this application;
FIG. 2 is a schematic diagram of a specific status detection procedure in a specific implementation according to this application;
FIG. 3 is a schematic diagram of another specific status detection procedure in a specific implementation according to this application;
FIG. 4 is a schematic diagram of another embodiment of a wireless network node according to this application;
FIG. 5 is a schematic diagram of another embodiment of a wireless network node according to this application;
FIG. 6 is a schematic diagram of an embodiment of a status detection method according to this application; and
FIG. 7 is a schematic diagram of another embodiment of a status detection method according to this application.

### DESCRIPTION OF EMBODIMENTS

This application provides a status detection method and a wireless network node, to greatly reduce traffic consumption between networks, reduce load on a network device, and improve detection efficiency.

To make persons skilled in the art understand the technical solutions in this application better, the following clearly and completely describes the technical solutions in the embodiments of the present invention with reference to the accompanying drawings in this application. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

In the specification, claims, and accompanying drawings of the present invention, the terms "first", "second", and so on (if any) are intended to distinguish between similar objects but do not necessarily indicate a specific order or sequence. It should be understood that the data termed in such a way are interchangeable in proper circumstances so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

The following first describes an embodiment of the wireless network node in this application.

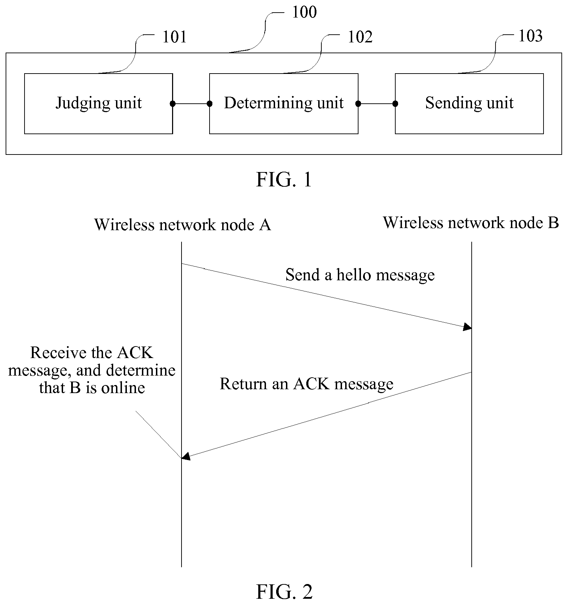

Referring to FIG. 1, a wireless network node in this application is applied to user plane service address pair status detection. The wireless network node 100 includes: a judging unit 101, a determining unit 102, and a sending unit 103.

The judging unit 101 is configured to determine whether a normal data packet sent by a target wireless network node is received within a first preset time interval.

In this application, the normal data packet may be a GTPU response request packet, for example, a GTPU Echo Req packet, or may be a normal User Datagram Protocol (User Datagram Protocol, UDP) data packet sent by the target wireless network node to the wireless network node, or the like. This is not limited herein.

The determining unit 102 is configured to: when the judging unit 101 determines that the normal data packet sent by the target wireless network node is received within the first preset time interval, determine that a status of the target network node is online, where when the status of the target network node is online, no probe packet needs to be sent to the target wireless network node.

The sending unit 103 is configured to send a probe packet to the target wireless network node when the judging unit 101 determines that the normal data packet sent by the target wireless network node is not received within the first preset time interval.

The determining unit 102 is further configured to: when a first response message returned by the target wireless network node is received, determine that the status of the target network node is online.

In this application, the judging unit 101 determines whether the normal data packet sent by the target wireless network node is received within the first preset time interval. When the judging unit 101 determines that the normal data packet sent by the target wireless network node is received within the first preset time interval, the determining unit 102 determines that the status of the target network node is online, where when the status of the target network node is online, no probe packet needs to be sent to the target wireless network node. The sending unit 103 sends the probe packet to the target wireless network node when the judging unit 101 determines that the normal data packet sent by the target wireless network node is not received within the first preset time interval. The determining unit 102 is further configured to: when the first response message returned by the target wireless network node is received, determine that the status of the target network node is online. According to this application, traffic consumption for status detection between two wireless network nodes is greatly reduced, load on a network device is reduced, and status detection efficiency is improved.

Optionally, the sending unit 103 is further configured to: when it is determined that the target network node is online at a current moment, if the normal data packet sent by the target network node is not received after the second preset time interval, send a probe packet to the target network node; and
the determining unit 102 is further configured to: when a second response message returned by the target wireless network node is received, determine that the status of the target network node is online.

Optionally, the sending unit 103 is further configured to resend the probe packet if the first response message returned by the target wireless network node is not received at a third preset moment; and
the determining unit 102 is configured to: if a response message returned by the target wireless network node is still not received when the sending unit 103 sends the probe packet for an N^{th} time, determine that the status of the target network node is offline, where N>1 and N is a positive integer.

The first wireless network node may be a base station or a radio network controller RNC. The second wireless network node is a base station or an RNC.

It should be noted that in this application, that a wireless network node determines that another wireless network node is online means that the wireless network node determines that the wireless network node and the another wireless network node are connected and may exchange information. If the wireless network node determines that the wireless network node and the another wireless network node are not connected, the wireless network node determines that the another wireless network node is offline.

The following describes a wireless network device status detection procedure with reference to a specific application scenario.

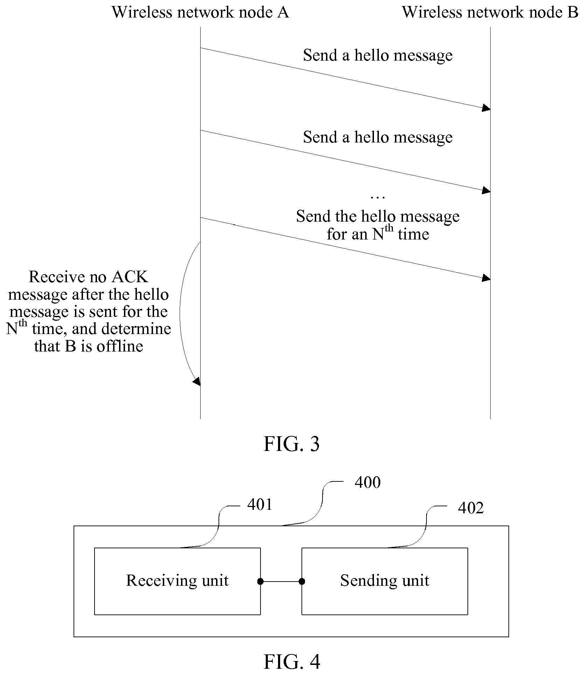

It is assumed that a target wireless network node B sends a hello message to a wireless network node A at regular time intervals (for example, 10s). The hello message may be a User Datagram Protocol (User Datagram Protocol, UDP) ping packet. As shown in FIG. 2, if A receives a hello message sent by B within a first preset time interval (for example, 10s), A determines that B is online. If A does not receive any hello message within the preset time interval, A proactively sends a hello message to B, and if B returns an acknowledgment response message (ACK message) to A, A determines that B is online. The ACK message may be an Internet Control Message Protocol (Internet Control Message Protocol, ICMP) ping packet. As shown in FIG. 3, if B does not return any ACK message within a second preset time interval, A resends the hello message. If B still does not return any ACK message when A sends the hello message for an N^{th} time, A determines that B is offline.

The following describes an embodiment of a wireless network node on another side in this application.

Referring to FIG. 4, another embodiment of a wireless network node in this application is applied to user plane service address pair status detection. The wireless network node 400 includes:
a receiving unit 401, configured to receive a probe packet sent by a target network node; and
a sending unit 402, configured to send, to the target network node within a first preset time interval, a first response message in response to the probe packet, so that the target network node determines that a status of the network node is online.

Optionally, the wireless network node further includes:
a judging unit, configured to determine whether a normal data packet sent by the target wireless network node is received within a second preset time interval; and
a determining unit, configured to: when the judging unit determines that the normal data packet sent by the target wireless network node is received within the second preset time interval, determine that a status of the target network node is online, where when the status of the target network node is online, no probe packet needs to be sent to the target wireless network node, where
the sending unit is further configured to send a probe packet to the target wireless network node when the judging unit determines that the normal data packet sent by the target wireless network node is not received within the second preset time interval; and
the determining unit is further configured to: when the receiving unit receives a second response message returned by the target wireless network node, determine that the status of the target network node is online.

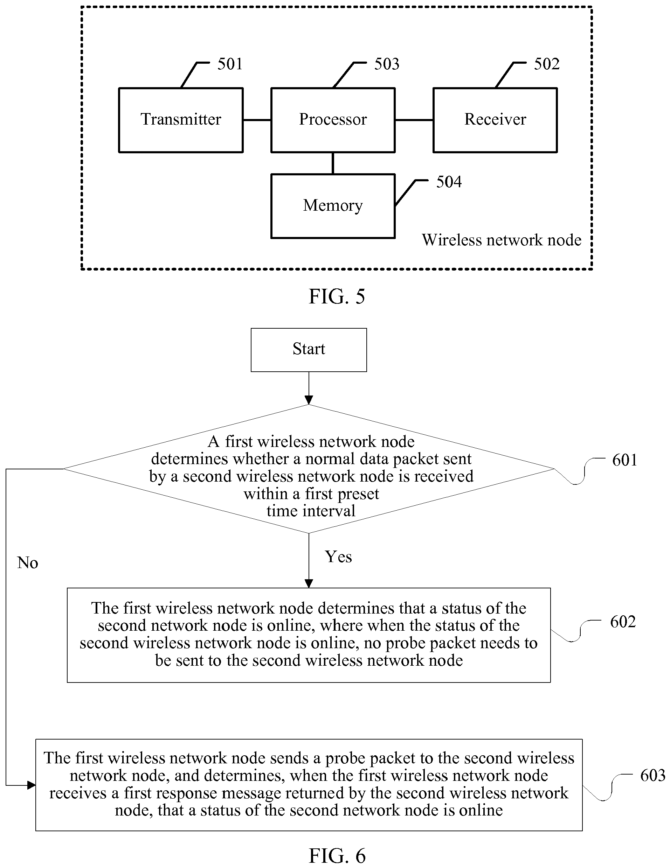

A terminal in this application is described above from a perspective of a cellular functional entity. The following describes the wireless network node shown in FIG. 1 in this application from a perspective of hardware processing. Referring to FIG. 5, a wireless network node in this application includes: a transmitter 501, a receiver 502, a processor 503 (there may be one or more processors 503), and a memory 504.

The wireless network node in this application may have more or fewer components than those shown in FIG. 5, two or more components may be combined, or a different component configuration or deployment may be used. The components may be implemented in hardware including one or more signal processing circuits and/or application-specific integrated circuits, software, or a combination of hardware and software.

The processor 503 is configured to perform the following operations:
determining whether a normal data packet sent by a target wireless network node is received within a first preset time interval; and
when the normal data packet sent by the target wireless network node is received within the first preset time interval, determining that a status of the target network node is online, where when the status of the target network node is online, no probe packet needs to be sent to the target wireless network node.

The transmitter 501 is configured to perform the following operation:
when the normal data packet sent by the target wireless network node is not received within the first preset time interval, sending a probe packet to the target wireless network node.

The processor 503 is further configured to perform the following operation:
when a first response message returned by the target wireless network node is received, determining that the status of the target network node is online.

Optionally, the transmitter 501 is configured to perform the following operation:
when it is determined that the target network node is online at a current moment, if the normal data packet sent by the target network node is not received after the second preset time interval, sending a probe packet to the target network node.

The processor 503 is further configured to perform the following operation:
when a second response message returned by the target wireless network node is received, determining that the status of the target network node is online.

Optionally, the transmitter 501 is configured to perform the following operation:
resending the probe packet if the first response message returned by the target wireless network node is not received at a third preset moment.

The processor 503 is further configured to perform the following operation:
if a response message returned by the target wireless network node is still not received when the transmitter 501 sends the probe packet for an N^{th} time, determining that the status of the target network node is offline, where N>1 and N is a positive integer.

The following describes an embodiment of the status detection method in this application.

Referring to FIG. 6, an embodiment of a status detection method of the present invention is applied to user plane service address pair status detection. The method includes the following steps.

601. A first wireless network node determines whether a normal data packet sent by a second wireless network node is received within a first preset time interval, and if yes, perform step 602, or if no, perform step 603.

602. The first wireless network node determines that a status of the second wireless network node is online, where when the status of the second wireless network node is online, no probe packet needs to be sent to the second wireless network node.

603. The first wireless network node sends a probe packet to the second wireless network node, and determines, when the first wireless network node receives a first response message returned by the second wireless network node, that a status of the second wireless network node is online.

In this application, when there is normal data traffic between two wireless network nodes, it may be directly determined that a peer end is online. When there is no normal data traffic between two wireless network nodes, a wireless network node that needs to know a peer end network status sends a probe packet to a peer end to determine whether the peer end is online. In this application, a quantity of service packets for peer end status detection is minimized by using traffic of the packets, thereby greatly reducing traffic consumption between networks, reducing load on a network device, and improving detection efficiency.

Optionally, the method further includes:
when it is determined that the second wireless network node is online at a current moment, if the first wireless network node does not receive, after the second preset time interval, a normal data packet sent by the second wireless network node, sending, by the first wireless network node, a probe packet to the second wireless network node; and
when the first wireless network node receives a second response message returned by the second wireless network node, determining that the status of the second wireless network node is online.

Optionally, the method further includes:
resending, by the first wireless network node, the probe packet if the first wireless network node does not receive, at a third preset moment, the first response message returned by the second wireless network node, and if a response message returned by the second wireless network node is still not received when the probe packet is sent for an N^{th} time, determining that the status of the second wireless network node if offline, where N>1 and N is a positive integer.

The following describes an embodiment of the status detection method on another side in this application.

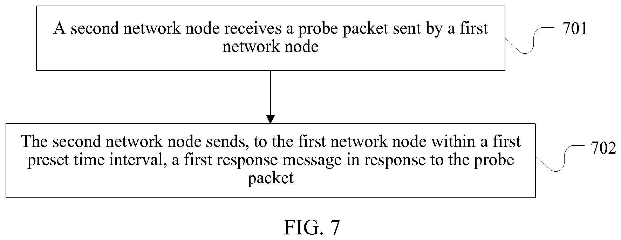

Referring to FIG. 7, another embodiment of a status detection method of the present invention is applied to user plane service address pair status detection. The method includes the following steps.

701. A second wireless network node receives a probe packet sent by a first wireless network node.

702. The second wireless network node sends, to the first wireless network node within a first preset time interval, a first response message in response to the probe packet, so that the first wireless network node determines that a status of the second wireless network node is online.

Optionally, the method further includes:
determining, by the second wireless network node, whether a normal data packet sent by the first wireless network node is received within a second preset time interval; and
if yes, determining, by the second wireless network node, that the status of the first wireless network node is online, where when the status of the first wireless network node is online, no probe packet needs to be sent to the second wireless network node; or
if no, sending, by the second wireless network node, a probe packet to the first wireless network node, and determining, when the second wireless network node receives a second response message returned by the first wireless network node, that the status of the first wireless network node is online.

This application further provides a computer storage medium. The computer storage medium may store a program. When the program is executed, some or all of the steps in the status detection method set forth in the foregoing method embodiment are performed.

Persons skilled in the art may clearly know that, for convenience and conciseness of description, in the foregoing embodiments, the embodiments emphasize different aspects, and for a part not described in detail in one embodiment, refer to relevant description of another embodiment.

It should be noted that, to make the description brief, the foregoing method embodiments are expressed as a series of actions. However, persons skilled in the art should appreciate that the present invention is not limited to the described action sequence, because according to the present invention, some steps may be performed in other sequences or performed simultaneously. In addition, persons skilled in the art should also appreciate that all the embodiments described in the specification are examples of embodiments, and the related actions and modules are not necessarily mandatory to the present invention.

In the foregoing embodiments, the description of each embodiment has respective focuses. For a part that is not described in detail in an embodiment, refer to related descriptions in other embodiments.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from scope of the technical solutions of the embodiments of the present invention.

## Claims

1. A status detection method performed by a first wireless network node, wherein the method comprises:
• determining whether a normal data packet sent by a second wireless network node is received within a first preset time interval, wherein the normal data packet is a General Packet Radio Service Tunneling Protocol - U Echo Request packet, GTP-U Echo Request packet (step 601);
• if the normal data packet sent by the second wireless network node is received within the first preset time interval, determining that a status of the second wireless network node is online, wherein when the status of the second wireless network node is online, no probe packet needs to be sent to the second wireless network node (step 602);
• if the normal data packet sent by the second wireless network node is not received within the first preset time interval, sending a probe packet to the second wireless network node, and determining, when the first wireless network node receives a first response message returned by the second wireless network node, that a status of the second wireless network node is online (step 603).

2. The method according to claim 1, wherein the method further comprises: resending the probe packet if the first wireless network node does not receive, at a preset moment, the first response message returned by the second wireless network node, and if a response message returned by the second wireless network node is still not received when the probe packet is sent for an N^{th} time, determining that the status of the second wireless network node if offline, wherein N>1 and N is a positive integer.

3. A status detection method performed by a second wireless network node, wherein the method comprises:
• receiving a probe packet sent by a first wireless network node (step 701);
• sending to the first wireless network node within a first preset time interval, a first response message in response to the probe packet (step 702);
• determining whether a normal data packet sent by the first wireless network node is received within a second preset time interval, wherein the normal data packet is a General Packet Radio Service Tunneling Protocol - U Echo Request packet, GTP-U Echo Request packet;
• if the normal data packet sent by the first wireless network node is received within the second preset time interval, determining that the status of the first wireless network node is online, wherein when the status of the first wireless network node is online, no probe packet needs to be sent to the first wireless network node; and
• if the normal data packet sent by the first wireless network node is not received within the second preset time interval, sending a probe packet to the first wireless network node, and determining, when the second wireless network node receives a second response message returned by the first wireless network node, that the status of the first wireless network node is online.

4. A first wireless network node comprising means configured to perform the steps of any of the methods according to claims 1 - 2.

5. A second wireless network node comprising means configured to perform the steps of the method according to claim 3.

6. A computer storage medium, wherein the medium is configured to store a program which, when executed by a computer associated with a second wireless network node, causes the steps according to claim 3 to be performed by the second wireless network node.

## Patentansprüche

1. Zustandserkennungsverfahren, das durch einen ersten drahtlosen Netzknoten durchgeführt wird, wobei das Verfahren Folgendes umfasst:
• Bestimmen, ob ein normales Datenpaket, das durch einen zweiten drahtlosen Netzknoten gesendet wurde, in einem ersten voreingestellten Zeitintervall empfangen wird, wobei das normale Datenpaket ein U-Echoanforderungspaket des allgemeinen Paketfunkdiensttunnelprotokolls, GTP-U-Echoanforderungspaket, ist (Schritt 601);
• Bestimmen dann, wenn das normale Datenpaket, das durch den zweiten drahtlosen Netzknoten gesendet wurde, im ersten voreingestellten Zeitintervall empfangen wird, dass ein Zustand des zweiten drahtlosen Netzknotens "Online" ist, wobei dann, wenn der Zustand des zweiten drahtlosen Netzknotens "Online" ist, kein Sondierungspaket zum zweiten drahtlosen Netzknoten gesendet werden muss (Schritt 602); und
• Senden dann, wenn das normale Datenpaket, das durch den zweiten drahtlosen Netzknoten gesendet wurde, nicht im ersten voreingestellten Zeitintervall empfangen wird, eines Sondierungspakets zum zweiten drahtlosen Netzknoten und Bestimmen dann, wenn der erste drahtlose Netzknoten eine erste Antwortnachricht, die durch den zweiten drahtlosen Netzknoten zurückgeliefert wurde, empfängt, dass ein Zustand des zweiten drahtlosen Netzknotens "Online" ist (Schritt 603).

2. Verfahren nach Anspruch 1, wobei das Verfahren ferner Folgendes umfasst:
erneutes Senden des Sondierungspakets, wenn der erste drahtlose Netzknoten zu einem voreingestellten Moment die erste Antwortnachricht, die durch den zweiten drahtlosen Netzknoten zurückgeliefert wurde, nicht empfängt, und wenn eine Antwortnachricht, die durch den zweiten drahtlosen Netzknoten zurückgeliefert wurde, immer noch nicht empfangen wurde, wenn das Sondierungspaket zum N-ten Mal gesendet wird, Bestimmen, dass der Zustand des zweiten drahtlosen Netzknotens "Offline" ist, wobei N > 1 und N eine positive ganze Zahl ist.

3. Zustandserkennungsverfahren, das durch einen zweiten drahtlosen Netzknoten durchgeführt wird, wobei das Verfahren Folgendes umfasst:
• Empfangen eines Sondierungspakets, das durch einen ersten drahtlosen Netzknoten gesendet wurde (Schritt 701);
• Senden zum ersten drahtlosen Netzknoten in einem ersten voreingestellten Zeitintervall einer ersten Antwortnachricht in Reaktion auf das Sondierungspaket (Schritt 702);
• Bestimmen, ob ein normales Datenpaket, das durch den ersten drahtlosen Netzknoten gesendet wurde, in einem zweiten voreingestellten Zeitintervall empfangen wird, wobei das normale Datenpaket ein U-Echoanforderungspaket des allgemeinen Paketfunkdiensttunnelprotokolls, GTP-U-Echoanforderungspaket, ist;
• Bestimmen dann, wenn das normale Datenpaket, das durch den ersten drahtlosen Netzknoten gesendet wurde, im zweiten voreingestellten Zeitintervall empfangen wird, dass der Zustand des ersten drahtlosen Netzknotens "Online" ist, wobei dann, wenn der Zustand des ersten drahtlosen Netzknotens "Online" ist, kein Sondierungspaket zum ersten drahtlosen Netzknoten gesendet werden muss; und
• Senden dann, wenn das normale Datenpaket, das durch den ersten drahtlosen Netzknoten gesendet wurde, nicht im zweiten voreingestellten Zeitintervall empfangen wird, eines Sondierungspakets zum ersten drahtlosen Netzknoten und Bestimmen dann, wenn der zweite drahtlose Netzknoten eine zweite Antwortnachricht, die durch den ersten drahtlosen Netzknoten zurückgeliefert wurde, empfängt, dass der Zustand des ersten drahtlosen Netzknotens "Online" ist.

4. Erster drahtloser Netzknoten, der Mittel umfasst, die konfiguriert sind, die Schritte eines der Verfahren nach Anspruch 1-2 durchzuführen.

5. Zweiter drahtloser Netzknoten, der Mittel umfasst, die konfiguriert sind, die Schritte des Verfahrens nach Anspruch 3 durchzuführen.

6. Computerspeichermedium, wobei das Medium konfiguriert ist, ein Programm zu speichern, das, wenn es durch einen Computer, der einem zweiten drahtlosen Netzknoten zugeordnet ist, ausgeführt wird, bewirkt, dass die Schritte nach Anspruch 3 durch den zweiten drahtlosen Netzknoten durchgeführt werden.

## Revendications

1. Procédé de détection d'état mis en œuvre par un premier nœud de réseau sans fil, le procédé comprenant :
• la détermination si un paquet de données normal envoyé par un deuxième nœud de réseau sans fil est reçu ou non au sein d'un premier intervalle de temps prédéfini, le paquet de données normal consistant en un paquet de demande d'écho sous protocole de tunnelisation du service général de radiocommunication par paquets - U, noté paquet de demande d'écho GTP-U (étape 601) ;
• si le paquet de données normal envoyé par le deuxième nœud de réseau sans fil est reçu au sein du premier intervalle de temps prédéfini, la détermination qu'un état du deuxième nœud de réseau sans fil est en ligne, aucun paquet sonde ne devant être envoyé au deuxième nœud de réseau sans fil lorsque l'état du deuxième nœud de réseau sans fil est en ligne (étape 602) ;
• si le paquet de données normal envoyé par le deuxième nœud de réseau sans fil n'est pas reçu au sein du premier intervalle de temps prédéfini, l'envoi d'un paquet sonde au deuxième nœud de réseau sans fil, et la détermination, lorsque le premier nœud de réseau sans fil reçoit un premier message de réponse renvoyé par le deuxième nœud de réseau sans fil, qu'un état du deuxième nœud de réseau sans fil est en ligne (étape 603).

2. Procédé selon la revendication 1, le procédé comprenant en outre :
l'envoi de nouveau du paquet sonde si le premier nœud de réseau sans fil ne reçoit pas, à un moment prédéfini, le premier message de réponse renvoyé par le deuxième nœud de réseau sans fil et, si un message de réponse renvoyé par le deuxième nœud de réseau sans fil n'est toujours pas reçu lorsque le paquet sonde est envoyé une N-ième fois, la détermination que l'état du deuxième nœud de réseau sans fil est hors ligne, N>1 et N étant un entier positif.

3. Procédé de détection d'état mis en œuvre par un deuxième nœud de réseau sans fil, le procédé comprenant :
• la réception d'un paquet sonde envoyé par un premier nœud de réseau sans fil (étape 701) ;
• l'envoi, au premier nœud de réseau sans fil, au sein d'un premier intervalle de temps prédéfini, d'un premier message de réponse en réponse au paquet sonde (étape 702);
• la détermination si un paquet de données normal envoyé par le premier nœud de réseau sans fil est reçu au sein d'un deuxième intervalle de temps prédéfini, le paquet de données normal consistant en un paquet de demande d'écho sous protocole de tunnelisation du service général de radiocommunication par paquets - U, noté paquet de demande d'écho GTP-U ;
• si le paquet de données normal envoyé par le premier nœud de réseau sans fil est reçu au sein du deuxième intervalle de temps prédéfini, la détermination que l'état du premier nœud de réseau sans fil est en ligne, aucun paquet sonde ne devant être envoyé au premier nœud de réseau sans fil lorsque l'état du premier nœud de réseau sans fil est en ligne ; et
• si le paquet de données normal envoyé par le premier nœud de réseau sans fil n'est pas reçu au sein du deuxième intervalle de temps prédéfini, l'envoi d'un paquet sonde au premier nœud de réseau sans fil, et la détermination, lorsque le deuxième nœud de réseau sans fil reçoit un deuxième message de réponse renvoyé par le premier nœud de réseau sans fil, que l'état du premier nœud de réseau sans fil est en ligne.

4. Premier nœud de réseau sans fil, comprenant des moyens configurés pour mettre en œuvre les étapes de l'un quelconque des procédés selon les revendications 1 - 2.

5. Deuxième nœud de réseau sans fil, comprenant des moyens configurés pour mettre en œuvre les étapes du procédé selon la revendication 3.

6. Support de stockage d'ordinateur, le support étant configuré pour stocker un programme qui, lorsqu'il est exécuté par un ordinateur associé à un deuxième nœud de réseau sans fil, amène le deuxième nœud de réseau sans fil à mettre en œuvre les étapes selon la revendication 3.
